# EUROPÄISCHE PATENTANMELDUNG

(11) **EP 3 336 022 A1**
(43) Veröffentlichungstag der Anmeldung: **20.06.2018**
(21) Anmeldenummer: 16205102.3
(22) Anmeldetag: 19.12.2016
(51) Int. Cl.: B65G 37/02, B24B 13/00, B24B 27/00, B65G 29/00, B65G 35/06, B65G 47/53

(54) **HERSTELLUNGSSYSTEM FÜR BRILLENGLÄSER**

(71) Anmelder: Carl Zeiss Vision International GmbH, 73430 Aalen (DE)
(72) Erfinder: Meschenmoser, Ralf, 73457 Essingen (DE); Schulz, Arne, 71229 Leonberg (DE); Klora, Dennis, 73479 Ellwangen (DE)
(74) Vertreter: Carl Zeiss AG - Patentabteilung

(57) **Zusammenfassung**

Die Erfindung betrifft ein Herstellungssystem (100) für Brillengläser aus Brillenglasrohlingen mit einer linken äußeren Transportspur (101) zum Transport der Brillenglasrohlinge in einer Transportrichtung (101a), mehreren linksseitig neben der linken äußeren Transportspur (101) angeordneten linken Prozesseinrichtungen (121, 123, 125, 127, 129, 131, 133, 135, 137, 139) für die Brillenglasrohlinge, einer rechten äußeren Transportspur (103) zum Transport der Brillenglasrohlinge in einer Transportrichtung (103a), einer zwischen der linken äußeren Transportspur (101) und der rechten äußeren Transportspur (103) angeordneten mittleren Transportspur (102) zum Transport der Brillenglasrohlinge in einer Transportrichtung (102a). Die Erfindung ist dadurch gekennzeichnet, dass mehrere rechtsseitig neben der rechten äußeren Transportspur (103) angeordnete rechte Prozesseinrichtungen (122, 124, 126, 128, 130, 132, 134, 136, 138) für die Brillenglasrohlinge vorhanden sind, die Transportrichtung (101a) der linken äußeren Transportspur (101) und die Transportrichtung (103a) der rechten äußeren Transportspur (103) identisch sind und die Transportrichtung (102a) der mittleren Transportspur (102) entgegengesetzt zu den Transportrichtungen (101a, 103a) der linken äußeren Transportspur (101) und rechten äußeren Transportspur (103) oder umkehrbar ist.

## Beschreibung

Die Erfindung betrifft ein Herstellungssystem für Brillengläser nach dem Oberbegriff des Patentanspruchs 1 sowie ein Verfahren zum Betrieb eines Herstellungssystems für Brillengläser aus Brillenglasrohlingen nach dem Oberbegriff des Patentanspruchs 14.

Bei der Brillenglasherstellung ist es bisher üblich, eine Prozesslinie aus mehreren Prozesseinrichtungen zu bilden, die von den zu bearbeitenden Brillenglasrohlingen nacheinander durchlaufen werden. Die Prozesslinie wird dann z.B. auf eine bestimme Sequenz von Prozessschritten und eine bestimmte Flächengestaltung des Brillenglases eingestellt. Für verschiedene Prozesse, beispielsweise unterschiedlich zu konditionierende und zu bearbeitende Brillengläser, muss entweder eine Umrüstung erfolgen oder es wird eine separate Prozesslinie eingesetzt.

Bei der Herstellung unterschiedlicher Brillengläser kann dies zur Folge haben, dass eine sehr ungleichmäßige Auslastung verschiedener Prozesslinien erfolgt oder dass eine häufige Umrüstung erforderlich ist. Das aufeinanderfolgende bzw. lineare Durchlaufen einer vorgegebenen Folge von Prozesseinrichtungen hat den Nachteil, dass bei Ausfall einer Prozesseinrichtung die Weiterprozessierung insgesamt angehalten werden muss. Weiter ist eine optimale Auslastung von verschiedenen Prozesseinrichtungen, insbesondere wenn diese unterschiedliche Kapazitäten haben, in den üblichen Prozesslinien nicht möglich.

Üblicherweise werden alle Prozesseinrichtungen und Transporteinrichtungen, welche die Brillenglasrohlinge zu den jeweiligen Prozesseinrichtungen der Prozesslinie transportieren, von einer zentralen Steuerung gesteuert. Insbesondere wird beispielsweise zentral festgelegt, welche Prozesseinrichtung welchen Brillenglasrohling in welcher Art und Weise bearbeitet. Bei bestehenden Prozesslinien ist eine Erweiterung daher bis dato sehr aufwendig. Häufig sind dann ein kompletter Umbau und eine Neuprogrammierung der zentralen Steuerung notwendig.

Transporteinrichtungen zum Transport der Brillenglasrohlinge zu den jeweiligen Prozesseinrichtungen sind in einer Vielzahl an Ausführungsvarianten bekannt.

Es gibt beispielsweise Gliederkettenförderbänder mit Weichen wie z.B. in der WO 03/013992 A1 beschrieben. Es gibt auch Laufschienensysteme der in der DE 195 06 670 A1 beschriebenen Art. Ferner existieren Rollenfördersysteme, wie sie z.B. in der EP 1 947 035 A1 offenbart sind. Schließlich sind auch Gurt- oder Bandförderer bekannt. Eine Ausführungsvariante eines Gurt- oder Bandförderers ist z.B. der DE 20 2012 011 690 U1 zu entnehmen.

Die DE 20 2012 011 690 U1 beschreibt eine Anlage zum Herstellen von Brillengläsern. Die Anlage umfasst mehrere separate Bearbeitungseinrichtungen und ein Transfersystem mit Gurt- oder Bandförderern zum Transport der zu bearbeitenden Brillenglasrohlinge zu und von den Bearbeitungseinrichtungen. Jeder Bearbeitungseinrichtung ist eine eigene Fördereinrichtung zugeordnet. Die Anlage verfügt über eine erste Transportspur zur Förderung der Brillenglasrohlinge von einer Bearbeitungseinrichtung zur nächsten und eine zweite parallele Transportspur zur parallelen Förderung der Brillenglasrohlinge. Zwischen den Bearbeitungseinrichtungen sind Transfereinrichtungen angeordnet, welche zur Aufnahme und temporaren Zwischenspeicherung und zur bedarfsweisen Weiterförderung der Brillenglasrohlinge wahlweise an eine Fördereinrichtung oder an die zweite Transportspur dienen. Die Transfereinrichtungen und die Fördereinrichtungen der Bearbeitungseinrichtungen bilden die erste Transportspur. Die Transfereinrichtungen und die Fördereinrichtungen sind unabhängig ansteuerbar. Eine dritte parallele Transportspur ist zur parallelen Förderung bzw. Rückförderung und/oder zur Zirkulation vorgesehen. Damit wird erreicht, dass die Brillenglasrohlinge an jede beliebige Bearbeitungseinrichtung transportiert werden kann.

Die DE 10 2007 059 303 A1 offenbart eine Anlage mit einem Hauptförderband, das mindestens zwei in gleicher Richtung umlaufende Spuren aufweist. Eine äußere Spur dient als Überholspur, auf welcher Werkstücke oder Werkstückträger, welche einer Bearbeitung nicht zugeführt werden sollen, weiter transportiert werden. Ein Wechsel von einer Transportspur auf eine andere Transportspur erfolgt durch Schieber und zugeordnete Stempel. Außerdem sind Querförderer mit in entgegengesetzter Richtung laufenden Förderbändern jeder Bearbeitungsstation zugeordnet, wobei zu bearbeitende Werkstücke bzw. Werkstückträger über entsprechende Weichen von dem Hauptförderband an die Querförderer zur Bearbeitung in der jeweiligen Bearbeitungsstation ausgeschleust werden.

Die WO 2013/131656 A2, von der die Erfindung ausgeht, schlägt eine Anlage zur Bearbeitung von Brillenglasrohlingen vor. Die Bearbeitung erfolgt mittels verschiedener Bearbeitungseinrichtungen, zwischen denen jeweils eine Transfereinrichtung angeordnet ist. Die Transfereinrichtungen dienen sowohl einer Längs- als auch einer Querförderung.

Jede Bearbeitungseinrichtung weist eine eigene Fördereinrichtung auf, die von der Bearbeitungseinrichtung selbst gesteuert wird.

Die Transfereinrichtungen werden von einer zentralen Transfersteuerung (auch MES = Manufacturing Executive System genannt) gesteuert. Die Transfereinrichtungen und die Fördereinrichtungen der Bearbeitungseinrichtungen bilden eine erste Transportspur. Die Transfereinrichtungen sind zur Aufnahme und temporaren Zwischenspeicherung und zur bedarfsweisen Weiterförderung eines Brillenglasrohlings wahlweise an eine Fördereinrichtung einer nachfolgenden Bearbeitungseinrichtung oder an eine zweite Transportspur ausgebildet.

Die zweite Transportspur verläuft parallel zu der ersten Transportspur. Die zweite Transportspur ist unabhängig von der ersten Transportspur steuerbar. Die zweite Transportspur ist aus mehreren unabhängig voneinander antreibbaren Fördereinrichtungen aufgebaut, die hintereinander mit ggfs. dazwischen angeordneten Transfereinrichtungen die zweite Transportspur bilden. Die zweite Transportspur und entsprechende Transfereinrichtungen zwischen der ersten und zweiten Transportspur, bevorzugt zwischen jeder Bearbeitungseinrichtung, ermöglichen ein bedarfsweises Überholen von Brillenglasrohlingen, beispielsweise für eine Bearbeitung von Brillenglasrohlingen mit besonderer Priorität, und/oder ein Umgehen oder Auswählen von bestimmten Bearbeitungseinrichtungen. Die Förderrichtung die zweite Transportspur bildenden Fördereinrichtungen und Transfereinrichtungen sind aus Flexibiltätsgründen umkehrbar.

Zusätzlich kann eine dritte Transportspur zur parallelen Förderung, insbesondere Rückförderung, von Brillenglasrohlingen oder deren (ggf. leeren) Transportbehälter vorgesehen sein. Die Rückförderung kann an ihre Ausgangsposition oder an eine geeignete Prozesseinrichtung zur Weiterbearbeitung erfolgen. Die zweite und dritte Transportspur weisen zueinander entgegengesetzte Förderrichtungen auf. Die dritte Transportspur verläuft ebenfalls parallel zu den anderen Transportspuren. Die Möglichkeit der Rückförderung durch Umkehr der Förderrichtung der zweiten Transportspur und/oder über die dritte Transportspur (bzw. über eine Rückförderverbindung) wird als vorteilhaft angesehen.

Der vorliegenden Erfindung liegt die Aufgabe zugrunde, ein Herstellungssystem für Brillengläser aus Brillenglasrohlingen sowie ein Verfahren zum Betrieb eines Herstellungssystems für Brillengläser aus Brillenglasrohlingen für hohen Durchsatz bereitzustellen.

Diese Aufgabe wird durch ein Herstellungssystem nach dem Patentanspruch 1 sowie ein Verfahren nach dem Patentanspruch 14 gelöst. Vorteilhafte Ausführungen und Weiterbildungen der Erfindung sind Gegenstand der Unteransprüche.

Das erfindungsgemäße Herstellungssystem für Brillengläser aus Brillenglasrohlingen umfasst drei Transportspuren zum Transport der Brillenglasrohlinge und eine Mehrzahl an Prozesseinrichtungen. Die drei Transportspuren sind nebeneinander angeordnet. Die drei Transportspuren werden der Unterscheidbarkeit wegen nachfolgend als linke äußere Transportspur, rechte äußere Transportspur und zwischen der linken äußeren Transportspur und der rechten äußeren Transportspur angeordnete mittlere Transportspur bezeichnet. Jede dieser Transportspuren ist zum Transport der Brillenglasrohlinge in einer jeweiligen Transportrichtung vorgesehen. Diese Transportspuren dienen dazu, die Brillenglasrohlinge zu den jeweiligen Prozesseinrichtungen zu transportieren, in denen diese bis zur Roh- oder finalen Fertigstellung prozessiert werden.

Die Erfindung sieht vor, dass nicht nur linksseitig neben der linken äußeren Transportspur mehrere Prozesseinrichtungen vorhanden sind, sondern dass auch rechtsseitig neben der rechten äußeren Transportspur mehrere Prozesseinrichtungen für die Brillenglasrohlinge angeordnet sind. Die linksseitig neben der linken äußeren Transportspur angeordneten mehreren Prozesseinrichtungen werden nachfolgend als linke Prozesseinrichtungen, die rechtsseitig neben der rechten äußeren Transportspur angeordneten Prozesseinrichtungen werden nachfolgend als rechte Prozesseinrichtungen bezeichnet.

Die Erfindung sieht weiter vor, dass die Transportrichtung der linken äußeren Transportspur und die Transportrichtung der rechten äußeren Transportspur identisch sind. Darüber hinaus sieht die Erfindung vor, dass die Transportrichtung der mittleren Transportspur entgegengesetzt zu den Transportrichtungen der linken äußeren Transportspur und der rechten äußeren Transportspur oder umkehrbar ist. Unter Transportrichtung ist jeweils die Bewegungsrichtung des jeweils transportierten Brillenglasrohlings längs der jeweiligen Transportspuren zu verstehen. Dies schließt nicht aus, dass zwischen den Transportspuren ein Transfer von Brillenglasrohlingen stattfindet bzw. stattfinden kann. Auch ist nicht ausgeschlossen, dass zweitweise überhaupt kein Transport stattfindet. Vielmehr soll zum Ausdruck gebracht werden, dass im Falle eines Transports längs der Transportspuren die Brillenglasrohlinge in den vorstehend beschriebenen Richtungen transportiert werden.

Durch diese Ausgestaltung wird die eingangs gestellte Aufgabe vollumfänglich gelöst.

Als Prozesseinrichtungen sind im Rahmen der vorliegenden Erfindung sämtliche Einrichtungen zu verstehen, in denen wenigstens ein Prozessschritt am jeweiligen Brillenglasrohling erfolgen kann, um diesen zum finalen Rohbrillenglas oder fertigen Brillenglas zu überführen.

Ganz allgemein umfasst der Begriff Prozesseinrichtung alle Arten von Bearbeitungseinrichtungen, Konditioniereinrichtungen und Kontrolleinrichtungen wie z.B. Einrichtungen zum Blocken, Abkühlen, Erwärmen, Befeuchten, Trocknen, Begasen, Formgeben wie insbesondere spanend Bearbeiten, Auftragen, Polieren, Prüfen und Messen, Beschichten und Markieren. Diese Prozesseinrichtungen sind üblicherweise in Reihe und zwar beidseitig der Transportstrecke, die durch die drei Transportspuren gebildet wird, angeordnet.

Die drei Transportspuren bilden zusammen eine Transportvorrichtung zum Transportieren eines Brillenglasrohlings von einer Aufnahmestelle, über die der Brillenglasrohling aufgenommen wird über die Transportstrecke auf der ein Transfer zur jeweiligen Prozesseinrichtung und wieder zurück erfolgt bis zu einer Abgabestelle, an der der prozessierte Brillenglasrohling im fertigen oder teilfertigen Zustand entnommen werden kann.

Üblicherweise wird der jeweilige Brillenglasrohling (oder ggf. eine Fassung für das Brillenglas) nicht unmittelbar auf der Transportspur abgelegt, sondern er wird von einem geeigneten Träger aufgenommen, welcher auf der jeweiligen Transportspur mitgeführt wird. Ein derartiger Träger kann z.B. ein Halter oder auch ein Behälter sein. Ein typischer Behälter ist z.B. in der EP 2 321 200 B1 beschrieben.

Eine Variante der Erfindung besteht darin, dass paarweise eine oder mehrere der rechten Prozesseinrichtungen einer oder mehreren der linken Prozesseinrichtungen in Bezug auf die linke, rechte und mittlere Transportspuren gegenüberliegend ein oder mehrere Prozesseinrichtungspaare bildend angeordnet sind. Anders ausgedrückt sind bei dieser Variante links neben der linken Transportspur und rechts neben der rechten Transportspur in gegenüberliegender Anordnung auf gleicher Höhe der Wertschöpfungskette jeweils eine Prozesseinrichtung angeordnet. Eine linke und eine rechte Prozesseinrichtung, die in gegenüberliegender Anordnung zur Transportstrecke angeordnet sind bilden jeweils ein Prozesseinrichtungspaar.

Durch diese Maßnahme wird eine optimierte Bearbeitung und Handhabung bei hoher Flexibilität und/oder geringem Platzbedarf insbesondere auch unter Berücksichtigung unterschiedlicher Prozessgeschwindigkeiten oder Kapazitäten von unterschiedlichen Prozesseinrichtungen ermöglicht.

Vorzugsweise ist einem solchen Prozesseinrichtungspaar eine Transfereinrichtung zugeordnet. Diese Transfereinrichtung dient einem Transfer der Brillenglasrohlinge zwischen der linken Prozesseinrichtung des Prozesseinrichtungspaars und der linken äußeren Transportspur sowie der mittleren Transportspur. Ferner dient sie einem Transfer der Brillenglasrohlinge zwischen der rechten Prozesseinrichtung des Prozesseinrichtungspaars und der rechten äußeren Transportspur sowie der mittleren Transportspur. Es können auch mehrere Prozesseinrichtungspaare vorhanden sein, denen jeweils eine solche Transfereinrichtung zugeordnet ist. Über die jeweils äußere Transportspur kann demnach eine Zufuhr eines Brillenglasrohlings (oder einer Brillenglasfassung) zur jeweils benachbarten Prozesseinrichtung zur wertschöpfenden Prozessierung erfolgen. Die mittlere Transportspur dient dem Rücktransport des Brillenglasrohlings zu einer in der Wertschöpfungskette vorhergehenden Prozesseinrichtung, um z.B. eine Nachbearbeitung oder nochmalige Überprüfung vorzunehmen.

Eine Ausgestaltung dieser Variante besteht darin, dass eine oder mehrere Transfereinrichtungen jeweils mehrere Dreh-/Transporteinrichtungen umfasst/umfassen. Vier dieser Dreh-/Transporteinrichtungen einer solchen Transfereinrichtung gehören dabei zur linken äußeren Transportspur, vier zur mittleren Transportspur und vier zur rechten äußeren Transportspur. Die linke äußere Transportspur umfasst demnach vier linke äußere Dreh-/Transporteinrichtungen der mehreren Dreh-/Transporteinrichtungen, die mittlere Transportspur umfasst vier mittlere Dreh-/Transporteinrichtungen der mehreren Dreh-/Transporteinrichtungen und die rechte äußere Transportspur umfasst vier rechte äußere Dreh-/Transporteinrichtungen der mehreren Dreh-/Transporteinrichtungen einer einem Prozesseinrichtungspaar zugeordneten Transfereinrichtung. Jede dieser Dreh-/Transporteinrichtungen, welche vorteilhafterweise in identischer Weise ausgebildet sind, ermöglicht zum Einen den Transport des Brillenglasrohlings (oder dessen Trägers) oder der Brillenglasfassung (oder deren Träger) längs der jeweiligen Transportspur und zum Anderen nach entsprechender Drehung den Transport des Brillenglasrohlings (oder dessen Trägers) zu einer benachbarten Transportspur oder einer benachbarten Prozesseinrichtung. Diese Ausgestaltung der Variante zeichnet sich durch ihre Modularität und Einfachheit aus. Die Dreh-/Transporteinrichtungen können z.B. als drehbare Doppelgurtförderbänder ausgestaltet sein.

Regelmäßig befindet sich eine ganze Zahl n Brillenglasrohlinge (oder dessen Träger) auf einer Dreh-/Transporteinrichtung. Die Auflagefläche für die Brillenglasrohlinge, Träger, Transportbehälter oder dergleichen auf einer Dreh-/Transporteinrichtung, welche im vorstehend angegebenen Ausführungsbeispiel durch die Gurtbänder der Doppelgurtförderbänder festgelegt ist, ist so gewählt, dass ein oder mehrere Brillenglasrohlinge, Träger, Transportbehälter oder dergleichen Platz finden.

In weiterer Ausgestaltung dieser zuletzt beschriebenen Variante ist vorgesehen, dass die vier linken äußeren Dreh-/Transporteinrichtungen und die vier mittleren Dreh-/Transporteinrichtungen und die vier rechten äußeren Dreh-/Transporteinrichtungen eine 3 x 4 - Matrix bildend angeordnet sind. Unter einer Matrix versteht man im Rahmen der vorliegenden Erfindung ganz allgemein einen Aufbau in der Art einer Tabelle mit Zeilen und Spalten zuordenbaren Feldern. In Draufsicht sind die Dreh-/Transporteinrichtungen wie die Felder einer drei Zeilen und vier Spalten aufweisenden Tabelle angeordnet. Eine derartige 3 x 4 - Matrix kann in einfacher Weise einem jeweiligen Prozesseinrichtungspaar zugeordnet werden.

Eine weitere Ausführungsvariante, die auf den beiden zuletzt beschriebenen Varianten aufsetzen kann, sieht vor, dass linksseitig neben den vier linken äußeren Dreh-/Transporteinrichtungen zwei weitere linke Dreh-/Transporteinrichtungen angeordnet sind. Alternativ oder zusätzlich können rechtsseitig neben den vier rechten äußeren Dreh-/Transporteinrichtungen zwei weitere rechte Dreh-/Transporteinrichtungen der mehreren Dreh-/Transporteinrichtungen angeordnet sein. Diese können auch Bestandteil der Transfereinrichtung sein. Sie dienen vornehmlich der Zwischenlagerung und Zuführung des Brillenglasrohlings zu der jeweiligen Prozesseinrichtung.

Das Herstellungssystem kann neben den oben beschriebenen Transportspuren eine (oder ggf. mehrere) zwischen der linken äußeren Transportspur und der mittleren Transportspur angeordnete linke mittlere Transportspur zum Transport der Brillenglasrohlinge in einer Transportrichtung aufweisen. Alternativ oder zusätzlich ist es möglich, dass auch eine (oder ggf. mehrere) zwischen der rechten äußeren Transportspur und der mittleren Transportspur angeordnete rechte mittlere Transportspur(en) zum Transport der Brillenglasrohlinge in einer Transportrichtung vorhanden ist (sind). Diese zusätzlichen Transportspuren können zum einen dem Transport in Richtung der Wertschöpfungskette, zur Rückführung und/oder zur Zwischenlagerung einzelner oder mehrerer Brillenglasrohlinge dienen.

Bei der zuletzt beschriebenen Ausführungsform hat es sich als vorteilhaft herausgestellt, wenn die linke mittlere Transportspur vier linke mittlere Dreh-/Transporteinrichtungen der mehreren Dreh-/Transporteinrichtungen umfasst und wenn alternativ oder zusätzlich die rechte mittlere Transportspur vier rechte mittlere Dreh-/Transporteinrichtungen der mehreren Dreh-/Transporteinrichtungen umfasst. Vorzugsweise sind demnach die den Transportspuren zugehörigen Dreh-/Transporteinrichtungen in der Art einer 4 x 4 - Matrix oder in der Art einer 5 x 4 - Matrix angeordnet.

Wie oben bereits im Detail beschrieben wurde, dienen die Dreh-/Transporteinrichtungen dem Transfer der Brillenglasrohlinge zwischen den Transportspuren und den benachbart angeordneten Prozesseinrichtungen eines jeweiligen Prozesseinrichtungspaars. Zu diesem Zweck sind die Dreh-/Transporteinrichtungen drehbar ausgeführt. Führt man die mehreren Dreh-/Transporteinrichtungen in 45°-Schritten drehbar aus, wie dies die Erfindung in besonders vorteilhafter Weise vorsieht, ist ein Transfer eines Brillenglasrohlings nicht nur zwischen Dreh-/Transporteinrichtungen einer Zeile oder einer Spalte der Matrix möglich, sondern auch in diagonaler Richtung aneinander angrenzender Dreh-/Transporteinrichtungen benachbarter Zeilen und benachbarter Spalten. Die effektive Transportgeschwindigkeit eines Brillenglasrohlings entlang der Wertschöpfungskette kann durch diese Maßnahme signifikant erhöht werden. Darüber hinaus eröffnen sich weitere Möglichkeiten zur Zwischenlagerung der Brillenglasrohlinge.

Aus dem gleichen Grund ist es sinnvoll, was eine weitere Variante der Erfindung darstellt, die Transportrichtung der linken mittleren Transportspur umkehrbar auszugestalten und/oder die Transportrichtung der rechten mittleren Transportspur umkehrbar auszuführen.

Während es nach dem oben beschriebenen Stand der Technik stets als vorteilhaft beschrieben ist, Transportrichtungen sämtlicher Transportspuren umkehrbar auszugestalten, haben die Erfinder des vorliegend vorgestellten Herstellungssystems erkannt, dass dies nicht zwangsläufig in eine schnelle Prozessführung mündet. Vielmehr erscheint es günstiger, die Transportrichtungen insbesondere der äußeren Transportspuren nicht zu ändern und diese vielmehr in Richtung zunehmender Wertschöpfung zu belassen. Konkret schlagen die Erfinder daher vor, dass die Transportrichtung der linken äußeren Transportspur nicht umkehrbar ist und/oder dass die Transportrichtung der rechten äußeren Transportspur nicht umkehrbar ist. Auch die Transportrichtung der mittleren Transportspur kann nicht umkehrbar ausgestaltet sein. Nicht umkehrbar meint in diesem Zusammenhang im Regelbetrieb insbesondere während des gesamten Prozesszyklus in Bezug auf die Prozessierung eines Brillenglasrohlings zum fertigen Brillenglas bzw. zum nicht weiter in dem Herstellungssystem zu prozessierenden Brillenglasrohling. Der Begriff nicht umkehrbar bezieht sich nicht auf den Wartungs- oder Testbetrieb, sondern betrifft lediglich den regulären Herstellprozess.

Die linke äußere Transportspur einer Ausführungsform des erfindungsgemäßen Herstellungssystems weist eine oder mehrere linke äußere Transporteinrichtungen auf, welche zum Transport der Brillenglasrohlinge in der Transportrichtung der linken äußeren Transportspur angetrieben ist/sind. In entsprechender Weise kann die rechte äußere Transportspur alternativ oder zusätzlich eine oder mehrere rechte äußere Transporteinrichtungen aufweist, welche zum Transport der Brillenglasrohlinge in der Transportrichtung der rechten äußeren Transportspur angetrieben ist/sind. Schließlich kann auch die mittlere Transportspur alternativ oder zusätzlich eine oder mehrere Transporteinrichtungen aufweisen, welche zum Transport der Brillenglasrohlinge in der Transportrichtung der mittleren Transportspur angetrieben ist/sind. Ganz allgemein ist es sinnvoll, wenn jede Transporteinrichtung und jede Dreh-/Transporteinrichtung einen eigenen Transportantrieb aufweist. Darüber hinaus ist es vorteilhaft, wenn jede Dreh-/Transporteinrichtung neben dem eigenen Transportantrieb auch einen eigenen Drehantrieb auf, welcher ggf. unabhängig von dem Transportantrieb steuerbar ist. Die Transporteinrichtungen und die Dreh-/Transporteinrichtungen sind damit vollständig autark ansteuerbar. Damit wird ein hoher Grad an Flexibilität erreicht.

Genauso wie die Dreh-/Transporteinrichtungen können auch die Transporteinrichtungen als Doppelgurtförderbänder ausgebildet sein. Die Transporteinrichtungen der beiden äußeren Transportspuren dienen der Förderung der Brillenglasrohlinge in Wertschöpfungsrichtung. Vorzugsweise erfolgt eine Förderung ausschließlich in Wertschöpfungsrichtung. Die Transporteinrichtungen der mittleren Transportspur dienen der Förderung der Brillenglasrohlinge entgegen der Wertschöpfungsrichtung. Vorzugsweise erfolgt eine Förderung ausschließlich entgegen der Wertschöpfungsrichtung auf der mittleren Transportspur.

Aus demselben Grund der Bereitstellung eines hohen Grads an Flexibilität sieht eine Ausführungsvariante der Erfindung vor, dass eine Recheneinrichtung vorhanden ist. Die Recheneinrichtung kann eingerichtet sein, einen schnellsten Transportweg zu berechnen, um einen vorbestimmten Brillenglasrohling der Brillenglasrohlinge zu einer vorbestimmten Prozesseinrichtung der Prozesseinrichtungen zu transportieren. Alternativ oder zusätzlich ist die Recheneinrichtung eingerichtet, einen kürzesten Transportweg zu berechnen, um einen vorbestimmten Brillenglasrohling der Brillenglasrohlinge zu einer vorbestimmten Prozesseinrichtung der Prozesseinrichtungen zu transportieren. Eine ebenfalls vorhandene Steuereinrichtung sorgt dafür, insbesondere z.B. durch entsprechende Ansteuerung der Transporteinrichtungen und der Dreh-/Transporteinrichtungen den vorbestimmten Brillenglasrohling auf dem berechneten Transportweg zu transportieren.

Ein Aspekt der Erfindung betrifft auch ein Verfahren zum Betrieb eines Herstellungssystems für Brillengläser aus Brillenglasrohlingen. Dieses Verfahren geht von einem Herstellungssystem aus, welches eine linke äußere Transportspur zum Transport der Brillenglasrohlinge in einer Transportrichtung, mehrere linksseitig neben der linken äußeren Transportspur angeordnete linke Prozesseinrichtungen für die Brillenglasrohlinge, eine rechte äußere Transportspur zum Transport der Brillenglasrohlinge in einer Transportrichtung und eine zwischen der linken äußeren Transportspur und der rechten äußeren Transportspur angeordnete mittlere Transportspur zum Transport der Brillenglasrohlinge in einer Transportrichtung aufweist. Erfindungsgemäß ist vorgesehen, dass die Brillenglasrohlinge über die linke äußere Transportspur und/oder die rechte äußere Transportspur und/oder die mittlere Transportspur zu einer oder mehreren der linken Prozesseinrichtungen oder zu einer oder mehreren rechtsseitig neben der rechten äußeren Transportspur angeordneten mehreren rechten Prozesseinrichtungen für die Brillenglasrohlinge transportiert werden. Weiter werden die Brillenglasrohlinge auf der linken äußeren Transportspur und auf der rechten äußeren Transportspur in der identischen Transportrichtung transportiert. Schließlich werden die Brillenglasrohlinge nach der erfindungsgemäßen Lösung auf der mittleren Transportspur entgegengesetzt zu den Brillengläsern auf der linken äußeren Transportspur und den Brillengläsern auf der rechten äußeren Transportspur transportiert.

Im Zusammenhang mit dem Verfahren ist Gegenstand der Erfindung auch ein Computerprogramm mit Programmcode zur Durchführung der vorstehend beschriebenen Verfahrensschritte, wenn das Computerprogramm in einem Computer geladen und/oder in einem Computer ausgeführt wird.

Die eingangs gestellte Aufgabe wird durch dieses Verfahren und das zur Durchführung des Verfahrens programmierte Computerprogramm vollumfänglich gelöst.

Das mit Hilfe des Computerprogramms computerimplementierte Verfahren kann auch den Verfahrensschritt der Steuerung des Transfers eines der Brillenglasrohlinge zwischen den oben beschriebenen Transportspuren und des Zu- und Abführens zu einer jeweiligen Prozesseinrichtung aufweisen.

Das Computerprogramm kann auch Steuerbefehle für den Antrieb der zu einer erfindungsgemäßen Variante beschriebenen Transporteinrichtungen, insbesondere der Doppelförderbänder, umfassen. Weiter kann das Computerprogramm die Steuerbefehle für den Transportantrieb (z.B. Doppelförderbänder) und den Drehantrieb (z.B. einen Schrittmotor) der zu einer Variante beschriebenen Dreh-/Transporteinrichtungen aufweisen.

Es ist ferner vorgesehen, dass das Computerprogramm auch einen Algorithmus umfasst, welches zur Berechnung des oben beschriebenen kürzesten oder schnellsten Transportwegs dient.

Die Erfindung wird nachfolgend anhand der Zeichnungen näher beschrieben. Es zeigen:
- Figur 1: ein erstes Ausführungsbeispiel eines erfindungsgemäßen Herstellungssystems in Draufsicht von oben
- Figur 2: einen Ausschnitt betreffend die Fördertechnik aus dem erfindungsgemäßen Herstellungssystem nach der Figur 1
- Figur 3: einen Ausschnitt aus einem erfindungsgemäßen Herstellungssystem mit einer alternativen Ausführungsvariante zur in der Figur 2 gezeigten Fördertechnik
- Figur 4: eine Transporteinrichtung in perspektivischer Ansicht
- Figur 5: eine Dreh-/Transporteinrichtung in perspektivischer Ansicht
- Figur 6: die Dreh-/Transporteinrichtung nach der Figur 5 in Draufsicht

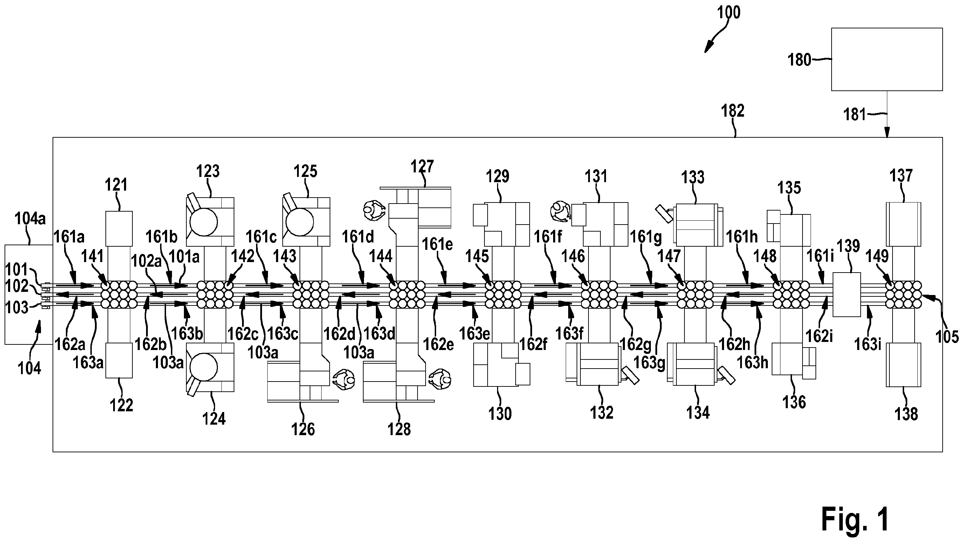

Die Figur 1 zeigt ein erstes Ausführungsbeispiel eines erfindungsgemäßen Herstellungssystems 100 für Brillengläser aus Brillenglasrohlingen in Draufsicht von oben.

Das Herstellungssystem umfasst drei Transportspuren 101, 102, 103 zum Transport der Brillenglasrohlinge und eine Mehrzahl an Prozesseinrichtungen 121, 122, ...137, 138. Die drei Transportspuren 101, 102, 103 sind nebeneinander angeordnet. Die drei Transportspuren 101, 102, 103 werden der Unterscheidbarkeit wegen wie oben bereits ausgeführt als linke äußere Transportspur 101, rechte äußere Transportspur 103 und mittlere Transportspur 102 bezeichnet. Jede dieser Transportspuren 101, 102, 103 ist zum Transport der Brillenglasrohlinge in einer jeweiligen Transportrichtung 101a, 102a, 103a vorgesehen. Diese Transportspuren 101, 102, 103 dienen dazu, die Brillenglasrohlinge zu den jeweiligen Prozesseinrichtungen 121, 122, ...137, 138 zu transportieren, in denen diese bis zur Roh- oder finalen Fertigstellung prozessiert werden. Die drei Transportspuren 101, 102, 103 bilden demnach zusammen eine Transportvorrichtung zum Transportieren eines Brillenglasrohlings von einer Aufnahmestelle 104, über die der Brillenglasrohling aufgenommen wird, über die Transportstrecke auf der ein Transfer zur jeweiligen Prozesseinrichtung 121, 122, ...137, 138 und wieder zurück zur Transportstrecke erfolgt auf der er bis zu einer Abgabestelle 105, an der der prozessierte Brillenglasrohling im fertigen oder teilfertigen Zustand entnommen werden kann.

Neben der linken äußeren Transportspur 101 sind mehrere Prozesseinrichtungen 121, 123, 125, 127, 129, 131, 133, 135, 137 angeordnet. Neben der rechten äußeren Transportspur 103 sind ebenfalls mehrere Prozesseinrichtungen 122, 124, 126, 128, 130, 132, 134, 136, 138 für die Brillenglasrohlinge angeordnet. Die Prozesseinrichtung 121 ist eine Blockeinrichtung zum Blocken der Brillenglasrohlinge. Die Prozesseinrichtung 122 ist eine Messeinrichtung, um die Oberflächenkontur der geblockten Fläche des Brillenglasrohlings zu messen. Die Prozesseinrichtungen 123, 124 und 125 sind Fräseinrichtungen. Die Prozesseinrichtungen 126, 127, 128 sind spanabhebende Dreheinrichtungen. Die Prozesseinrichtungen 129, 130, 131 sind Konditioniereinrichtungen. Die Prozesseinrichtungen 132, 133, 134 sind Vorpoliereinrichtungen und die Prozesseinrichtungen 135, 136 sind Nachpoliereinrichtungen. Die Prozesseinrichtung 137 ist eine Markiereinrichtung und die Prozesseinrichtung 138 ist eine Qualitätsprüfeinrichtung. Eine weitere Prozesseinrichtung 139, welche alle drei Transportspuren 101, 102, 103 überspannt ist eine Reinigungseinrichtung 140.

Der Figur 1 entnimmt man, dass die Transportrichtung 101a der linken äußeren Transportspur 101 und die Transportrichtung 103a der rechten äußeren Transportspur 103 identisch sind. Demgegenüber ist die Transportrichtung 102a der mittleren Transportspur 102 entgegengesetzt zu den Transportrichtungen 101a, 103a der linken äußeren Transportspur 101 und der rechten äußeren Transportspur 103. Unter Transportrichtung ist jeweils die Bewegungsrichtung des jeweils transportierten Brillenglasrohlings längs der jeweiligen Transportspuren 101, 102, 103 zu verstehen. Dies schließt nicht aus, dass an nachfolgend beschriebenen Transferstellen zwischen den Transportspuren 101, 102, 103 ein Transfer von Brillenglasrohlingen stattfindet bzw. stattfinden kann. Die Brillenglasrohlinge werden während des jeweiligen Transports ausgehend von der Aufnahme 104 mit Hilfe eines Aufnahmebehälters transportiert. In diesem Transportbehälter sind die Brillenglasrohlinge, z.B. die Halbfabrikate, üblicherweise paarweise abgelegt. Paarweise bedeutet in diesem Zusammenhang, dass die in einem Transportbehälter abgelegten Brillenglasrohlinge für die beiden Brillengläser einer Brille eines Nutzers bestimmt sind.

Der Figur 1 entnimmt man, dass jeweils zwei Prozesseinrichtungen, die in Bezug auf die Transportvorrichtung einander gegenüber liegend angeordnet sind, jeweils ein Prozesseinrichtungspaar bilden. So bilden die Prozesseinrichtungen 121 und 122 ein Prozesseinrichtungspaar. Weiter bilden die Prozesseinrichtungen 123 und 124 ein Prozesseinrichtungspaar. Es bilden auch die Prozesseinrichtungen 125 und 126 ein Prozesseinrichtungspaar usw.

Jedem Prozesseinrichtungspaar 121, 122; 123, 124; 125, 126; ... 135, 136; 137, 138 eine Transfereinrichtung 141, 142, 143, ... 146, 147, 148, 149 zugeordnet. Diese Transfereinrichtungen 141, 142, 143, ... 146, 147, 148, 149 dienen einem Transfer der Brillenglasrohlinge zwischen der jeweiligen linken Prozesseinrichtung 121, 123, 125, 127, 129, 131, 133, 135, 137, 139 des Prozesseinrichtungspaars 121, 122; 123, 124; 125, 126; ... 135, 136; 137, 138 und der linken äußeren Transportspur 101 sowie der mittleren Transportspur 102. Ferner dienen die Transfereinrichtungen 141, 142, 143, ... 146, 147, 148, 149 einem Transfer der Brillenglasrohlinge zwischen der jeweiligen rechten Prozesseinrichtung 122, 124, 126, 128, 130, 132, 134, 136, 138 des Prozesseinrichtungspaars 121, 122; 123, 124; 125, 126; ... 135, 136; 137, 138 und der rechten äußeren Transportspur 103 sowie der mittleren Transportspur 102.
Über die jeweils äußere Transportspur 101, 103 kann demnach eine Zufuhr eines Brillenglasrohlings zur jeweils benachbarten Prozesseinrichtung (z.B. zu der Prozesseinrichtung 127) zur wertschöpfenden Prozessierung erfolgen. Die mittlere Transportspur 102 dient dem Rücktransport des Brillenglasrohlings zu einer in der Wertschöpfungskette vorhergehenden Prozesseinrichtung (z.B. ausgehend von der Prozesseinrichtung 127 zur Prozesseinrichtung 126 oder zur Prozesseinrichtung 125 oder zur Prozesseinrichtung 121 usw.), um z.B. eine Nachbearbeitung oder nochmalige Überprüfung vorzunehmen.

Jede Transportspur 101, 102, 103 umfasst neben den alle Transportspuren 101, 102, 103 übergreifenden Transfereinrichtungen 141, 142, 143, ... 146, 147, 148, 149 eine Mehrzahl an Transporteinrichtungen 161a, 162a, 163a, 161b, 162b, 163b ...161h, 162h, 163h, 161i, 162i, 163i, welche als Doppelgurtförderbänder ausgebildet sind. Die Transporteinrichtungen 161a, 161b, 161c, ... 161h, 161i; 163a, 163b, 163c, ...163h, 163i der beiden äußeren Transportspuren 101, 103 dienen der Förderung der Brillenglasrohlinge in Wertschöpfungsrichtung. Es erfolgt eine Förderung ausschließlich in Wertschöpfungsrichtung. Die Transporteinrichtungen 162a, 162b, 162c, ... 162h, 162i der mittleren Transportspur 102 dienen der Förderung der Brillenglasrohlinge entgegen der Wertschöpfungsrichtung. Es erfolgt eine Förderung ausschließlich entgegen der Wertschöpfungsrichtung auf der mittleren Transportspur 102.

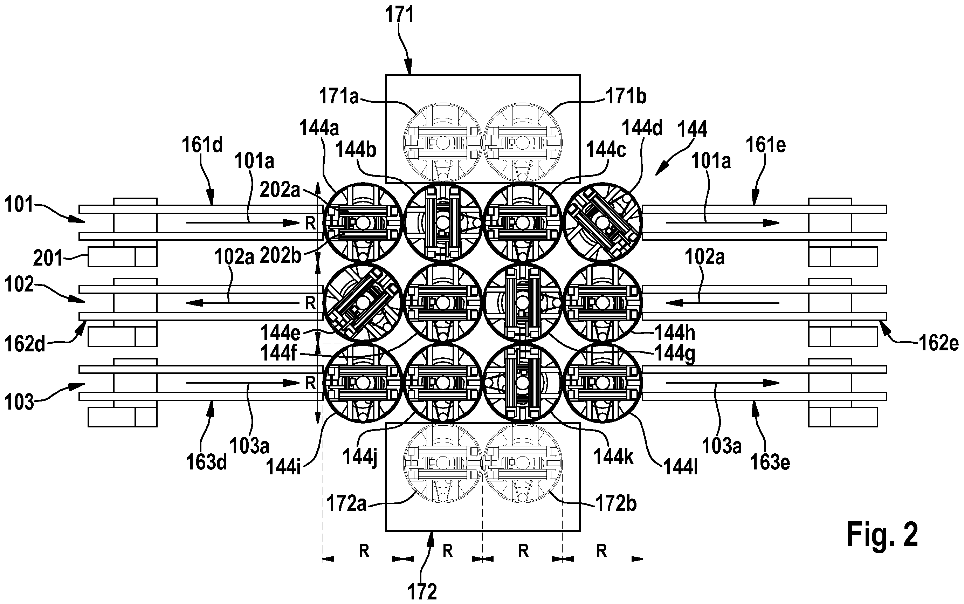

Die Transporteinrichtungen 161a, 161b, ... 161i, 162a, 162b, ... 162i, 163a, 163b, ...163i und die Transfereinrichtungen 141, 142, 143, ... 146, 147, 148, 149 sind in identischer Weise ausgeführt. Die Figur 2 zeigt einen Ausschnitt aus der Figur 1, in dem sechs Transporteinrichtungen 161d, 161e, 162d, 162e, 163d, 163e, die Transfereinrichtung 144 sowie zwei Zuführ-/Zwischenlagermodule 171, 172 für die Prozesseinrichtungen 127, 128 zu sehen sind.

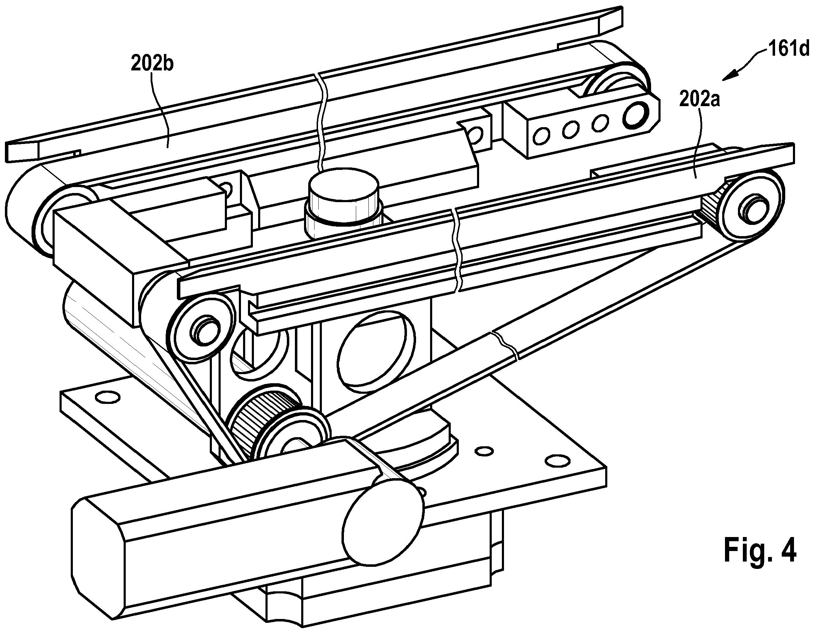

Die Figur 4 zeigt exemplarisch die Transporteinrichtung 161d. Diese Transporteinrichtung 161d umfasst einen motorischen Antrieb 201 und zwei Gurtbänder 202a, 202b, die von dem motorischen Antrieb 201 angetrieben werden. Die beiden Gurtbänder 202a, 202b dienen als Auflagefläche für den oben beschriebenen Transportbehälter für die Brillenglasrohlinge.

Die Transfereinrichtung 144 umfasst zwölf Dreh-/Transporteinrichtungen 144a, 144b, 144c, ... 144i, 144j 144k, 1441. Die vier Dreh-/Transporteinrichtungen 144a, 144b, 144c, 144d der Transfereinrichtung 144 gehören dabei zur linken äußeren Transportspur 101, die vier Dreh-/Transporteinrichtungen 144e, 144f, 144g, 144h gehören zur mittleren Transportspur 102 und die vier Dreh-/Transporteinrichtungen 144i, 144j, 144k, 1441 gehören zur rechten äußeren Transportspur 103. Sie bilden damit eine 3 x 4 - Matrix.

Beidseitig der Transfereinrichtung 144 sind jeweils zwei weitere Dreh-/Transporteinrichtungen 171a, 171b; 172a, 172b angeordnet. Diese Dreh-/Transporteinrichtungen 171a, 171b; 172a, 172b bilden die beiden Zuführ-/Zwischenlagermodule 171, 172, welche vornehmlich der Zwischenlagerung und Zuführung des Brillenglasrohlings zu der jeweiligen Prozesseinrichtung 127, 128 dienen.

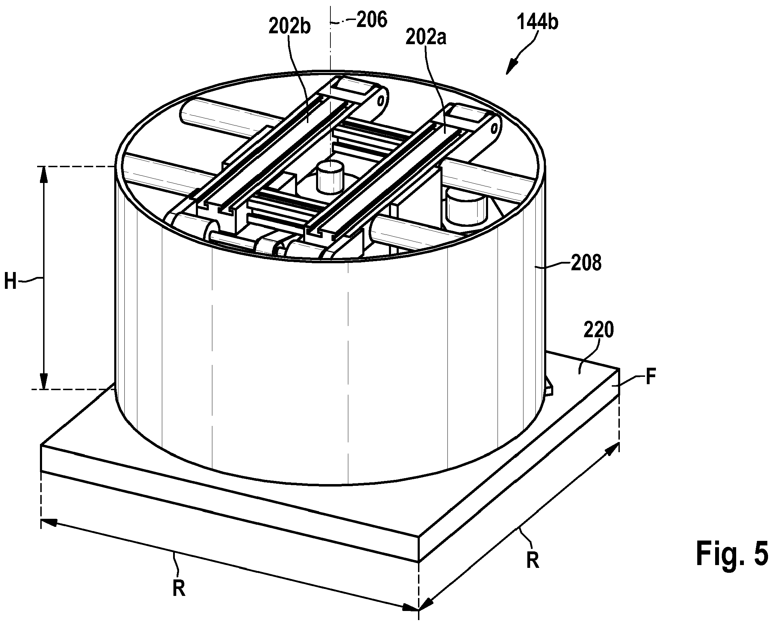

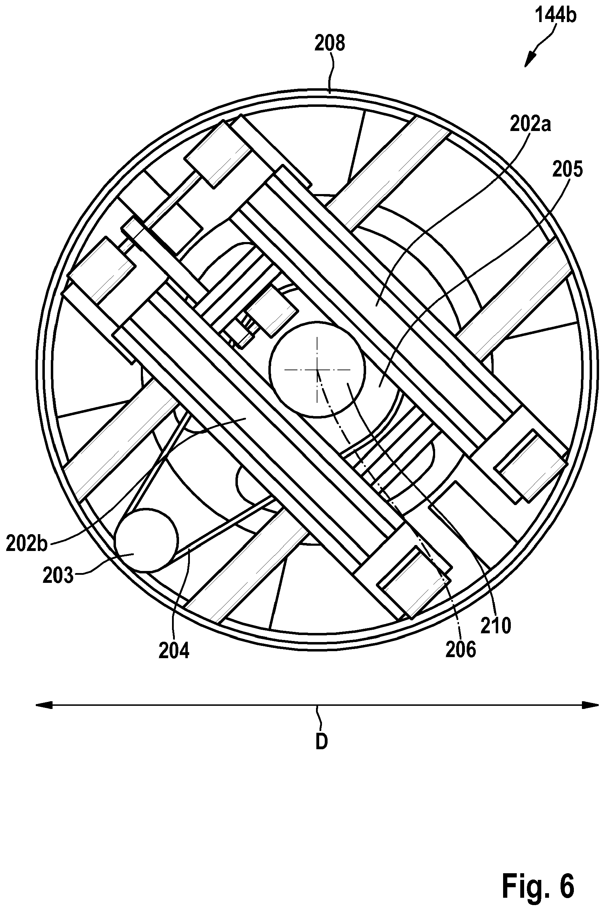

Alle Dreh-/Transporteinrichtungen 144a, 144b, 144c, ... 144i, 144j 144k, 1441; 171a, 171b; 172a, 172b sind in identischer Weise ausgebildet. Die Figur 5 zeigt exemplarisch die Dreh-/Transporteinrichtung 144b in perspektivischer Darstellung. Die Figur 6 zeigt dieselbe Dreh-/Transporteinrichtung 144b in Draufsicht von oben. Die Dreh-/Transporteinrichtung 144b umfasst grundsätzlich eine Transporteinrichtung der in der Figur 4 gezeigten Art mit motorischem Antrieb 201 in miniaturisierter Ausführung und zwei Gurtbändern 202a, 202b. Darüber hinaus verfügt die Dreh-/Transporteinrichtung 144b über eine Dreheinrichtung mit motorischem Antrieb 203, der ein Rad 205 über ein Gurtband 204 drehend um eine vertikale Achse 206 antreiben und so die Transportrichtung der beiden Gurtbänder 202a, 202b ändern kann. Die Dreh-/Transporteinrichtung 144b ermöglicht zum Einen den Transport des Transportbehälters längs der Transportspur 101 und zum Anderen nach entsprechender Drehung den Transport des Transportbehälters zu der benachbarten mittleren Transportspur 102 oder der benachbarten Prozesseinrichtung 127. Konkret kann ausgehend zwischen der Dreh-/Transporteinrichtung 144b und den Dreh-/Transporteinrichtungen 144a, 144c, 144e, 144f, 144g, 171a, 171b ein Transfer bzw. eine Übergabe des Transportbehälters stattfinden. Zu diesem Zweck muss die Dreh-/Transporteinrichtung 144b in 45°-Schritten gedreht werden können.

Zur Bereitstellung eines hohen Grads an Flexibilität ist eine Recheneinrichtung 180 vorhanden. Die Recheneinrichtung 180 ist eingerichtet, einen schnellsten Transportweg zu berechnen, um einen Transportbehälter mit Brillenglasrohlingen zu einer vorbestimmten Prozesseinrichtung (z.B. der Prozesseinrichtung 127) zu transportieren. Weiter ist die Recheneinrichtung 180 eingerichtet, einen kürzesten Transportweg zu berechnen, um einen vorbestimmten Brillenglasrohling der Brillenglasrohlinge zu einer vorbestimmten Prozesseinrichtung (z.B. der Prozesseinrichtung 127) der Prozesseinrichtungen 121, 122; 123, 124; 125, 126; ... 135, 136; 137, 138 zu transportieren. Schließlich ist ein Algorithmus in der Recheneinrichtung 180 hinterlegt, der vorbestimmte Vorfahrtsregeln bei der Berechnung des schnellsten oder kürzesten Transportwegs berücksichtigt. Eine ebenfalls vorhandene Steuereinrichtung, welche z.B. über eine drahtlose Verbindung 181 mit der Recheneinrichtung 180 verbunden ist, sorgt dafür, insbesondere z.B. durch entsprechende Ansteuerung der Transporteinrichtungen 161a, 161b, ... 161i, 162a, 162b, ... 162i, 163a, 163b, ...163i und der Dreh-/Transporteinrichtungen 144a, 144b, 144c, ... 144i, 144j 144k, 1441; 171a, 171b; 172a, 172b den Transportbehälter mit den Brillenglasrohlingen auf dem berechneten Transportweg zu transportieren.

Die Transportgeschwindigkeit der Transporteinrichtungen 161a, 161b, ... 161i, 162a, 162b, ... 162i, 163a, 163b, ...163i und der Dreh-/Transporteinrichtungen 144a, 144b, 144c, ... 144i, 144j 144k, 1441; 171a, 171b; 172a, 172b ist größer als 10 m/min und kann in der Ausführungsvariante variabel geregelt werden. Jede Dreh-/Transporteinrichtung 144a, 144b, 144c, ... 144i, 144j 144k, 1441; 171a, 171b; 172a, 172b hat eine RFID Lesestation 210 vorzugsweise im Drehpunkt 206 integriert. Damit können unterschiedliche Transportbehälter und somit unterschiedliche Aufträge in Echtzeit immer und überall verfolgt werden. Es ist auch unerheblich in welcher Ausrichtung die Transportbehälter transportiert werden d.h. es muss nicht mehr gewährleistet werden dass die Transportbehälter eine definierte Ausrichtung zur Transporteinheit, nämlich z.B. den Gurtbändern 202a, 202b aufweist (Es ist unerheblich, wo der rechte/linke Brillenglasrohling bezüglich der Transportrichtung liegt).

Die nach oben weisende Fläche der Dreh-/Transporteinrichtungen 144a, 144b, 144c, ... 144i, 144j 144k, 1441; 171a, 171b; 172a, 172b wird in der Draufsicht zu maximal 50 % abgedeckt, um einen Einsatz im Reinraum ISO Klasse 5 zu ermöglichen. Somit kann ein laminarer Luftstrom mit Geschwindigkeitsaustritt von 0,3 (0,2 - 0,4 m/s) auf Produktebene durchströmen. Die Transportbehälter überwinden die Distanz zur nächsten Prozesseinrichtung 127, 128 mittels günstiger Doppelgurtförderbänder 202a, 202b.

Die Logik (Bewegung, Puffer / Parken, Stoppen zum Ausweichen bzw. Vorfahrtsregel) wird auf der eigentlichen mittleren Transportspur 102, insbesondere den Dreh-/Transporteinrichtungen 144e, 144f, 144g, 144h der aus den Dreh-/Transporteinrichtungen 144a, 144b, 144c, ... 144i, 144j 144k, 1441 gebildeten 3 x 4 - Matrix abgewickelt. Die Steuerungseinrichtung 182 des Herstellungssystems 100 übernimmt die Grundregeln, die von der Recheneinrichtung 180, z.B. das System PCS der Firma Quantum, vorgegeben werden. Ein ständiger Informationsabgleich ist Voraussetzung. Jeder Auftrag lässt sich immer in Echtzeit auf der tatsächlichen Position lokalisieren. Die Entscheidungen zum optimalen Transportweg finden auf der Recheneinrichtungsebene statt und zwar "Schritt für Schritt" (n, n+1,n+2 etc.).

Die jeweils zwei (oder ggf. mehr) Dreh-/Transporteinrichtungen 171a, 171b; 172a, 172b, welche die Zuführ-/Zwischenlagermodule 171, 172 bilden und welche außerhalb des Mengenstroms angeordnet sind, bedienen direkt oder indirekt die Prozesseinrichtungen 161a, 161b, ... 161i, 162a, 162b, ... 162i, 163a, 163b, ...163i (z.B. eine Poliermaschine). Dies erfolgt regelmäßig mittels 6-Achs-Roboter und Doppel-Schwenk-Greifer z.B. mit Vakuumsauger.

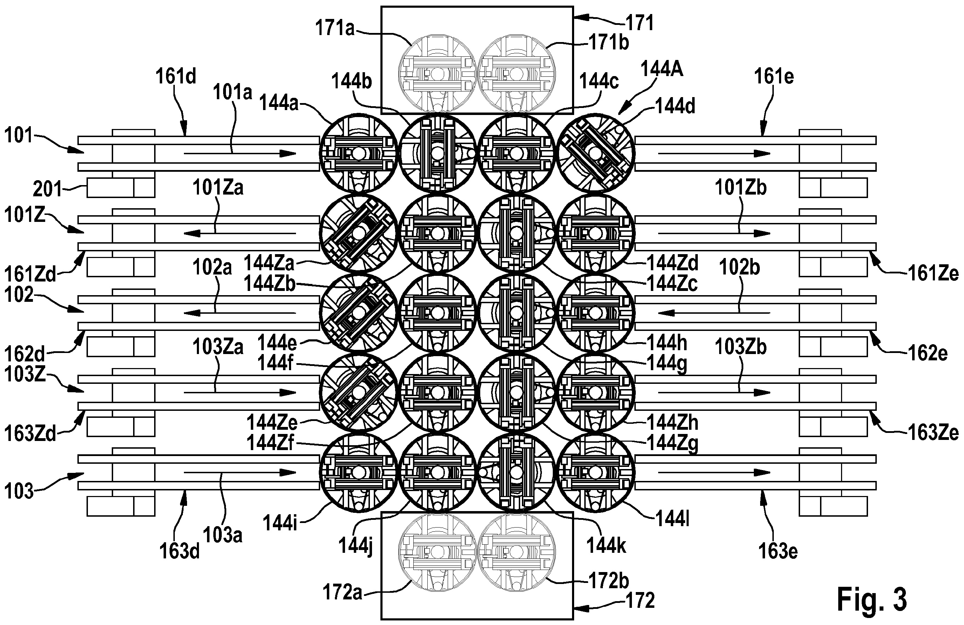

Grundsätzlich ist das Herstellungssystem 100 in X und Y skalierbar. Das Herstellungssystem 100 kann neben den oben beschriebenen Transportspuren 101, 102 und 103 eine (oder ggf. mehrere) zwischen der linken äußeren Transportspur 101 und der mittleren Transportspur 102 angeordnete linke mittlere Transportspur 101Z zum Transport der Brillenglasrohlinge in einer Transportrichtung aufweisen. Das Herstellungssystem kann auch eine (oder ggf. mehrere) zwischen der rechten äußeren Transportspur 103 und der mittleren Transportspur 102 angeordnete rechte mittlere Transportspur(en) 103Z zum Transport der Brillenglasrohlinge in einer Transportrichtung aufweisen, wie dies z.B. die Figur 3 ausschnittsweise zeigt.

Diese zusätzlich zu den Transportspuren 101, 102, 103 vorhandenen Transportspuren 101Z, 103Z können zum einen dem Transport in Richtung der Wertschöpfungskette, zur Rückführung und/oder zur Zwischenlagerung von Transportbehältern mit den Brillenglasrohlingen dienen. Die Figur 3 zeigt vier der zusätzlich zu den Transporteinrichtungen 161a, 161b, ... 161i, 162a, 162b, ... 162i, 163a, 163b, ...163i vorhandenen Transporteinrichtungen 161Zd, 161Ze, 163Zd, 163Ze, welche Bestandteil der zusätzlichen Transportspuren 101Z, 103Z sind.

Die linke mittlere Transportspur 101Z umfasst vier linke mittlere Dreh-/Transporteinrichtungen 144Za, 144Zb, 144Zc, 144Zd. Die rechte mittlere Transportspur 103Z umfasst vier rechte mittlere Dreh-/Transporteinrichtungen 144Ze, 144Zf, 144Zg, 144Zh. Die den Transportspuren 101, 101Z, 102, 103Z, 103 zugehörigen Dreh-/Transporteinrichtungen 144a, 144b, 144c, ... 144i, 144j 144k, 1441 und 144Za, 144Zb, 144Zc, 144Zd sowie 144Ze, 144Zf, 144Zg, 144Zh sind in der Art einer 5 x 4 - Matrix eine Transfereinrichtung 144A bildend angeordnet. Darüber hinaus sind die Dreh-/Transporteinrichtungen 171a, 171b; 172a, 172b der Zuführ-/Zwischenlagermodule 171, 172 eingezeichnet.

Die Dreh-/Transporteinrichtungen 144a, 144b, 144c, ... 144i, 144j 144k, 1441 und 144Za, 144Zb, 144Zc, 144Zd haben in den vorstehend beschriebenen und in den Figuren 2 bis 6 gezeigten Ausführungsvarianten eine Höhe in Bezug auf die Bodenfläche zwischen 800 mm und 1200 mm, die gängige Höhe ist 950 mm. Die Modulbauhöhe H ist ca. 200 mm (siehe Figur 5) und die Dreh-/Transporteinrichtungen 144a, 144b, 144c, ... 144i, 144j 144k, 1441 und 144Za, 144Zb, 144Zc, 144Zd sind in einem Raster R von 300 mm angeordnet (siehe Figuren 2 und 5). D.h., die Dreh-/Transporteinrichtungen 144a, 144b, 144c, ... 144i, 144j 144k, 1441 und 144Za, 144Zb, 144Zc, 144Zd haben einen Außendurchmesser D von 298 mm (siehe Figur 6). Da die einzelnen Dreh-/Transporteinrichtungen 144a, 144b, 144c, ... 144i, 144j 144k, 1441 und 144Za, 144Zb, 144Zc, 144Zd einen geschlossenen Außenring 208 haben (siehe Figuren 5 und 6), entsteht keine Quetsch- und Scherstelle und somit kann die jeweilige komplette Matrix, welche die Transfereinrichtung 144 bzw. 144A bildet, ohne Einhausung und Sicherheitseinrichtungen wie z.B. Lichtschranken auskommen.

Im unteren Bereich befindet sich ein Grundrahmen, auf dem sowohl die Dreh-/Transporteinrichtungen 144a, 144b, 144c, ... 144i, 144j 144k, 1441 und 144Za, 144Zb, 144Zc, 144Zd als auch die Transporteinrichtungen 161a, 161b, ... 161i, 162a, 162b, ... 162i, 163a, 163b, ...163i, 161Zd, 161Ze, 163Zd, 163Ze montiert sind. Auf einer Höhe in Bezug auf die Bodenfläche zwischen 200 mm und 600 mm ist die komplette Medienführung von Druckluft, Stromversorgung (auch für die Prozesseinrichtungen 121, 122; 123, 124; 125, 126; ... 135, 136; 137, 138), Prozessmedien z.B. Poliermittel und weiteres integriert.

Alle Dreh-/Transporteinrichtungen (Matrix-Einzelmodule) 144a, 144b, 144c, ... 144i, 144j 144k, 1441 und 144Za, 144Zb, 144Zc, 144Zd weisen Steckverbindungen für Mechanik, Stromversorgung, Pneumatik, Sensorik/Steuerung (SPS) usw. auf, so dass diese schnell getauscht und wieder in Betrieb genommen werden können. So sind kurze Unterbrechungen sichergestellt.

Wie im allgemeinen Beschreibungsteil ausgeführt wurde, haben die Erfinder des vorliegend vorgestellten Herstellungssystems 100 erkannt, dass es günstig ist, die Transportrichtungen 101a, 103a der äußeren Transportspuren 101, 103 nicht zu ändern und diese vielmehr in Richtung zunehmender Wertschöpfung zu belassen. Konkret schlagen die Erfinder vor, dass die Transportrichtung 101a der linken äußeren Transportspur 101 nicht umkehrbar ist und dass die Transportrichtung 103a der rechten äußeren Transportspur 103 nicht umkehrbar ist. Auch die Transportrichtung 102 der mittleren Transportspur 102 kann nicht umkehrbar ausgestaltet sein. Nicht umkehrbar meint in diesem Zusammenhang im Regelbetrieb insbesondere während des gesamten Prozesszyklus in Bezug auf die Prozessierung eines Brillenglasrohlings zum fertigen Brillenglas bzw. zum nicht weiter in dem Herstellungssystem 100 zu prozessierenden Brillenglasrohling. Der Begriff nicht umkehrbar bezieht sich nicht auf den Wartungs- oder Testbetrieb, sondern betrifft lediglich den regulären Herstellprozess. Ist die Transportrichtung umkehrbar, so bedeutet dies nicht zwangsläufig, dass die Transportrichtung über der gesamten Transportspur umgekehrt wird. Vielmehr kann auch die Transportrichtung innerhalb einzelner Abschnitte, insbesondere auf einem oder mehreren Transporteinrichtungen und/oder auf einem oder mehreren Dreh-/Transporteinrichtungen umgekehrt werden.

Bei der in der Figur 3 gezeigten Ausführungsvariante ist die jeweilige Transportrichtung 101Za, 102a, 102b der Transporteinrichtungen 161Zd, 162d, 162e entgegen der Wertschöpfungsrichtung und insbesondere entgegen der jeweiligen Transportrichtung 101a, 101Zb, 103Za, 103Zb, 103a der übrigen Transporteinrichtungen 161d, 161e, 161Ze, 163Zd, 163Ze, 163d, 163e. Diese umgekehrte Transportrichtung 161Zd, 162d, 162e erfolgt überwiegend aufgrund der Notwendigkeit einer Nacharbeit oder zum Zweck des Rücktransports von leeren Transportbehältern.

Das Betriebsverfahren für das gesamte Herstellungssystem 100 -natürlich auch in jeglicher Abwandlung und insbesondere in der in der Figur 3 skizzierten und vorstehend beschriebenen Variante- ist computerimplementiert und wird über ein entsprechendes Computerprogramm mit Programmcode, welches sich auf dem Computer, nämlich insbesondere repräsentiert durch die Recheneinrichtung 180 und die Steuereinrichtung 182, befindet und dessen Prozessoren realisiert.

Es umfasst die Steuerung des Transfers der Transportbehälter zwischen den oben beschriebenen Transportspuren 101, 101Z, 102, 103Z, 103 und das Zu- und Abführen zu einer jeweiligen Prozesseinrichtung 121, 122; 123, 124; 125, 126; ... 135, 136; 137, 138.

Das Computerprogramm umfasst auch Steuerbefehle für den Antrieb der Transporteinrichtungen 161a, 161b, ... 161i, 162a, 162b, ... 162i, 163a, 163b, ...163i, 161Zd, 161Ze, 163Zd, 163Ze, insbesondere der Doppelförderbänder. Es umfasst weiter die Steuerbefehle für den Transportantrieb (z.B. Doppelförderbänder) und den Drehantrieb (z.B. einen Schrittmotor) der oben beschriebenen Dreh-/Transporteinrichtungen 144a, 144b, 144c, ... 144i, 144j 144k, 1441 und 144Za, 144Zb, 144Zc, 144Zd.

Das Computerprogramm weist einen Algorithmus auf, welcher zur Berechnung des oben beschriebenen kürzesten oder schnellsten Transportwegs dient. Die Logistikregeln sind algorithmisch so berechnet, dass die Transporteinrichtungen 161a, 161b, ... 161i, 162a, 162b, ... 162i, 163a, 163b, ...163i, 161Zd, 161Ze, 163Zd, 163Ze und die Dreh-/Transporteinrichtungen 144a, 144b, 144c, ... 144i, 144j 144k, 1441 und 144Za, 144Zb, 144Zc, 144Zd selbstregelnd und autonom funktionieren und sich sogar auf den jeweiligen zulässigen Herstellungszustand WIP (work in production) des jeweiligen Brillenglasrohlings einschwingen. Regeln wir "schnellster Weg zur nächsten Station" oder "kürzester Weg" oder "Vollgut hat Vorfahrt" sind vorgegeben. Für die Suche nach dem besten Weg kommen spezielle Algorithmen zur Anwendung, die die jeweils nächsten Zustände der Transporteinrichtungen 161a, 161b, ... 161i, 162a, 162b, ... 162i, 163a, 163b, ...163i, 161Zd, 161Ze, 163Zd, 163Ze und der Dreh-/Transporteinrichtungen 144a, 144b, 144c, ... 144i, 144j 144k, 1441 und 144Za, 144Zb, 144Zc, 144Zd betrachten und per algorithmischer Berechnung den nächsten Weg für die Transportbehälter vorgeben. Die Dreh-/Transporteinrichtungen 144a, 144b, 144c, ... 144i, 144j 144k, 1441 und 144Za, 144Zb, 144Zc, 144Zd nutzen dabei auch die Möglichkeit des flexiblen, diagonalen Fahrens, welches mittels der algorithmischen Berechnung entschieden wird.

Dabei können sich eine ganze Zahl n Transportbehälter auf einer Dreh-/Transporteinrichtung 144a, 144b, 144c, ... 144i, 144j 144k, 1441 und 144Za, 144Zb, 144Zc, 144Zd befinden. Die Auflagefläche für die Transportbehälter auf einer Dreh-/Transporteinrichtung 144a, 144b, 144c, ... 144i, 144j 144k, 1441 und 144Za, 144Zb, 144Zc, 144Zd, welche im vorliegenden Ausführungsbeispiel durch die Gurtbänder 202a, 202b festgelegt ist, ist so gewählt, dass ein oder mehrere Transportbehälter Platz finden.

Mittels neuronale Netze werden von einem stirnseitigen Puffer 104a (siehe Figur 1) die Brillenglasrohlinge ideal eingesteuert und der Aufnahmestelle 104 (zusammen mit entsprechenden Transportbehältern) zugeführt werden. Dabei werden jeweils die Zustände der Prozesseinrichtungen 121, 122; 123, 124; 125, 126; ... 135, 136; 137, 138, die Zustände der in diesen Prozesseinrichtungen 121, 122; 123, 124; 125, 126; ... 135, 136; 137, 138verwendeten Werkzeuge, anstehende Wartungen oder auch günstigste Prozesseinrichtungs- und Auftragspaare berücksichtigt. Die Aufträge werden mit der jeweils günstigsten Auftrag-/Prozesseinrichtungskombination in die Fertigung eingesteuert. Der eingestellt WIP und vorliegende Kanban-Signale stellen dabei eine weitere Einflussgröße bei der Einsteuerung und auch der Belegung der Fördertechnik und Auslastung der Prozesseinrichtungen 121, 122; 123, 124; 125, 126; ... 135, 136; 137, 138 dar.

Aufgrund der von der Recheneinrichtung 180 durchgeführten algorithmischen Berechnung ist es möglich, dass über eine entsprechende Sensorik oder manuell identifizierte defekte Dreh-/Transporteinrichtungen 144a, 144b, 144c, ... 144i, 144j 144k, 1441 und 144Za, 144Zb, 144Zc, 144Zd und ggf. auch Transporteinrichtungen 161a, 161b, ... 161i, 162a, 162b, ... 162i, 163a, 163b, ...163i, 161Zd, 161Ze, 163Zd, 163Ze automatisch und selbstregelnd umfahren werden, da diese bereits bei der Suche nach dem kürzesten bzw. schnellsten Weg ausgeblendet werden. Die Recheneinrichtung 180 weist zu diesem Zweck eine Schnittstelle auf, über die diese Information zugeführt werden kann.

Nach Austausch des defekten Moduls (Dreh-/Transporteinrichtungen 144a, 144b, 144c, ... 144i, 144j 144k, 1441 und 144Za, 144Zb, 144Zc, 144Zd oder Transporteinrichtungen 161a, 161b, ... 161i, 162a, 162b, ... 162i, 163a, 163b, ...163i, 161Zd, 161Ze, 163Zd, 163Ze) bzw. der defekten Module, nutzt das Herstellungssystem automatisch diese Module wieder mit. Hierzu wird ein Statustag genutzt.

Aufträge können von z.B. laufenden Produktions- oder Nacharbeitsaufträgen überholt werden. Transportbehälter können an beliebiger Stelle aus dem Herstellungssystem 100 entnommen werden z.B. für manuelle Eingriffe, können aber auch genauso wieder an jeder beliebigen Stelle aufgesetzt werden. Das Herstellungssystem 100 erkennt unmittelbar die ID Kennung des Auftrags mit Hilfe der an dem Drehpunkt 206 angebrachten RFID Lesestation 210 und passt seine Regelung autark (ohne menschlichen Eingriff) an.

Die Aufträge werden unter anderem mittels Kanban-Signale (sog. Con WIP- oder Schrittmachersignale) an eine nächste Station (Transporteinrichtung, Dreh-/Transporteinrichtung, Prozesseinrichtung etc.) weitergeleitet.

Diese Kanban-Signale sind mit Zeitplangebern versehen, die es ermöglichen, einen Auftrag im Falle einer Störung selbstständig aus den Prozesseinrichtungen herauszufahren, um an eine andere freie Prozesseinrichtung weitergeleitet zu werden. All dies erfolgt ohne einen menschlichen Eingriff und durch ein selbstregelndes im Computer realisiertes System.

Durch all diese Vorgaben ist es dem Herstellungssystem 100 möglich, dass die Aufträge entweder in Bewegung oder in einer der Prozesseinrichtungen in Bearbeitung sind und somit der ideale WIP eingestellt ist und eine Durchlaufgeschwindigkeit von nur bis zu 1,2 Mal der Summe aller Prozesszeiten möglich ist.

Das Gesamtlayout ist in der in der Figur 1 gezeigten Variante in drei Kreisläufe verknüpft, wobei jeder in einem sogenannten ConWIP (controlled work in production) geregelt ist. Darüber hinaus werden Kanban-Signale nur innerhalb der Kreisläufe genutzt, dies ergibt eine Hybridsteuerung, was einen idealen Durchsatz / Durchlaufzeit ermöglicht.

Eine komplett geradlinige Anordnung der Transportspuren wie in der Figur 1 gezeigt ist die schnellste Variante, allerdings lassen sich jederzeit U- / L-Formen und Polygonzüge ermöglichen. Bezeichnend für alle Layoutformationen ist, dass die Transportrichtung für Vollgut immer eingehalten wird und lediglich Leergut, Nacharbeit oder ggf. Ausschuss in entgegengesetzter Richtung transportiert wird.

## Patentansprüche

1. Herstellungssystem (100) für Brillengläser aus Brillenglasrohlingen mit
- einer linken äußeren Transportspur (101) zum Transport der Brillenglasrohlinge in einer Transportrichtung (101a)
- mehreren linksseitig neben der linken äußeren Transportspur (101) angeordneten linken Prozesseinrichtungen (121, 123, 125, 127, 129, 131, 133, 135, 137, 139) für die Brillenglasrohlinge
- einer rechten äußeren Transportspur (103) zum Transport der Brillenglasrohlinge in einer Transportrichtung (103a)
- einer zwischen der linken äußeren Transportspur (101) und der rechten äußeren Transportspur (103) angeordneten mittleren Transportspur (102) zum Transport der Brillenglasrohlinge in einer Transportrichtung (102a)
**dadurch gekennzeichnet, dass**
- mehrere rechtsseitig neben der rechten äußeren Transportspur (103) angeordnete rechte Prozesseinrichtungen (122, 124, 126, 128, 130, 132, 134, 136, 138) für die Brillenglasrohlinge vorhanden sind,
- die Transportrichtung (101a) der linken äußeren Transportspur (101) und die Transportrichtung (103a) der rechten äußeren Transportspur (103) identisch sind,
- die Transportrichtung (102a) der mittleren Transportspur (102) entgegengesetzt zu den Transportrichtungen (101a, 103a) der linken äußeren Transportspur (101) und rechten äußeren Transportspur (103) oder umkehrbar ist.

2. Herstellungssystem (100) nach Anspruch 1, **dadurch gekennzeichnet, dass**
- paarweise eine oder mehrere der rechten Prozesseinrichtungen (122, 124, 126, 128, 130, 132, 134, 136, 138) einer oder mehreren der linken Prozesseinrichtungen (121, 123, 125, 127, 129, 131, 133, 135, 137, 139) in Bezug auf die linke, rechte und mittlere Transportspuren (101, 102, 103) gegenüberliegend ein oder mehrere Prozesseinrichtungspaare (121, 122; 123, 124; 125, 126; ... 135, 136; 137, 138) bildend angeordnet sind.

3. Herstellungssystem (100) nach Anspruch 2, **dadurch gekennzeichnet, dass**
- ein oder mehrere der Prozesseinrichtungspaare (121, 122; 123, 124; 125, 126; ... 135, 136; 137, 138) jeweils eine jeweils einem Prozesseinrichtungspaar (121, 122; 123, 124; 125, 126; ... 135, 136; 137, 138) zugeordnete Transfereinrichtung (141, 142, 143, ... 146, 147, 148, 149) für einen Transfer der Brillenglasrohlinge zwischen einer jeweiligen linken Prozesseinrichtung (121, 123, 125, 127, 129, 131, 133, 135, 137, 139) des jeweiligen Prozesseinrichtungspaars (121, 122; 123, 124; 125, 126; ... 135, 136; 137, 138) und der linken äußeren Transportspur (101) und der mittleren Transportspur (102) sowie für einen Transfer der Brillenglasrohlinge zwischen einer jeweiligen rechten Prozesseinrichtung (122, 124, 126, 128, 130, 132, 134, 136, 138) des jeweiligen Prozesseinrichtungspaars (121, 122; 123, 124; 125, 126; ... 135, 136; 137, 138) und der rechten äußeren Transportspur (103) und der mittleren Transportspur (102) aufweisen.

4. Herstellungssystem (100) nach Anspruch 3, **dadurch gekennzeichnet, dass**
- wenigstens eine der Transfereinrichtungen (141, 142, 143, ... 146, 147, 148, 149) mehrere Dreh-/Transporteinrichtungen (144a, 144b, 144c, ... 144i, 144j 144k, 1441 und 144Za, 144Zb, 144Zc, 144Zd) umfasst, wobei
(i) die linke äußere Transportspur (101) vier linke äußere Dreh-/Transporteinrichtungen (144a, 144b, 144c, 144d) der mehreren Dreh-/Transporteinrichtungen (144a, 144b, 144c, ... 144i, 144j 144k, 1441 und 144Za, 144Zb, 144Zc, 144Zd) umfasst,
(ii) die mittlere Transportspur (102) vier mittlere Dreh-/Transporteinrichtungen (144e, 144f, 144g, 144h) der mehreren Dreh-/Transporteinrichtungen (144a, 144b, 144c, ... 144i, 144j 144k, 1441 und 144Za, 144Zb, 144Zc, 144Zd) umfasst,
(iii) die rechte äußere Transportspur (103) vier rechte äußere Dreh-/Transporteinrichtungen (144i, 144j, 144k, 1441) der mehreren Dreh-/Transporteinrichtungen (144a, 144b, 144c, ... 144i, 144j 144k, 1441 und 144Za, 144Zb, 144Zc, 144Zd) umfasst.

5. Herstellungssystem (100) nach Anspruch 4, **dadurch gekennzeichnet, dass**
- die vier linken äußeren Dreh-/Transporteinrichtungen (144a, 144b, 144c, 144d) und die vier mittleren Dreh-/Transporteinrichtungen (144e, 144f, 144g, 144h) und die vier rechten äußeren Dreh-/Transporteinrichtungen (144i, 144j, 144k, 1441) eine 3 x 4 - Matrix bildend angeordnet sind.

6. Herstellungssystem (100) nach Anspruch 4 oder 5, **dadurch gekennzeichnet, dass**
- linksseitig neben den vier linken äußeren Dreh-/Transporteinrichtungen (144a, 144b, 144c, 144d) zwei weitere linke Dreh-/Transporteinrichtungen (171a, 171b) der mehreren Dreh-/Transporteinrichtungen (144a, 144b, 144c, ... 144i, 144j 144k, 1441 und 144Za, 144Zb, 144Zc, 144Zd) angeordnet sind und/oder dass
- rechtsseitig neben den vier rechten äußeren Dreh-/Transporteinrichtungen (144i, 144j, 144k, 1441) zwei weitere rechte Dreh-/Transporteinrichtungen (172a, 172b) der mehreren Dreh-/Transporteinrichtungen (144a, 144b, 144c, ... 144i, 144j 144k, 1441 und 144Za, 144Zb, 144Zc, 144Zd) angeordnet sind.

7. Herstellungssystem (100) nach einem der vorangegangenen Ansprüche, **dadurch gekennzeichnet, dass**
- eine zwischen der linken äußeren Transportspur (101) und der mittleren Transportspur (102) angeordnete linke mittlere Transportspur (101Z) zum Transport der Brillenglasrohlinge in einer Transportrichtung (101Za, 101Zb) und/oder
- eine zwischen der rechten äußeren Transportspur (103) und der mittleren Transportspur (102) angeordnete rechte mittlere Transportspur (103Z) zum Transport der Brillenglasrohlinge in einer Transportrichtung (103Za, 103Zb)
vorhanden ist/sind.

8. Herstellungssystem (100) nach dem auf einen der Ansprüche 4 bis 6 rückbezogenen Anspruch 7, **dadurch gekennzeichnet, dass**
(i) die linke mittlere Transportspur (101Z) vier linke mittlere Dreh-/Transporteinrichtungen (144Za, 144Zb, 144Zc, 144Zd) der mehreren Dreh-/Transporteinrichtungen (144a, 144b, 144c, ... 144i, 144j 144k, 1441 und 144Za, 144Zb, 144Zc, 144Zd) umfasst,
(ii) die rechte mittlere Transportspur (103Z) vier rechte mittlere Dreh-/Transporteinrichtungen (144Ze, 144Zf, 144Zg, 144Zh) der mehreren Dreh-/Transporteinrichtungen (144a, 144b, 144c, ... 144i, 144j 144k, 1441 und 144Za, 144Zb, 144Zc, 144Zd) umfasst.

9. Herstellungssystem (100) nach einem der Ansprüche 4 bis 6 oder nach dem auf einen der Ansprüche 4 bis 6 rückbezogenen Anspruch 7 oder nach Anspruch 8, **dadurch gekennzeichnet, dass** die mehreren Dreh-/Transporteinrichtungen (144a, 144b, 144c, ... 144i, 144j 144k, 1441 und 144Za, 144Zb, 144Zc, 144Zd) in 45°-Schritten drehbar sind.

10. Herstellungssystem (100) nach Anspruch 7 oder nach Anspruch 8 oder nach dem auf Anspruch 7 oder 8 rückbezogenen Anspruch 9, **dadurch gekennzeichnet, dass**
- die Transportrichtung (101Za, 101Zb) der linken mittleren Transportspur (101Z) umkehrbar ist und/oder
- die Transportrichtung (103Za, 103Zb) der rechten mittleren Transportspur (103Z) umkehrbar ist.

11. Herstellungssystem (100) nach einem der vorangegangenen Ansprüche, **dadurch gekennzeichnet, dass**
- die Transportrichtung (101a) der linken äußeren Transportspur (101) nicht umkehrbar ist und/oder
- die Transportrichtung (103a) der rechten äußeren Transportspur (103) nicht umkehrbar ist und/oder
- die Transportrichtung (102a) der mittleren Transportspur (102) nicht umkehrbar ist.

12. Herstellungssystem (100) nach einem der vorangegangenen Ansprüche, **dadurch gekennzeichnet, dass**
- die linke äußere Transportspur (101) eine oder mehrere linke äußere Transporteinrichtungen (161a, 161b, ... 161i) aufweist, welche zum Transport der Brillenglasrohlinge in der Transportrichtung (101a) der linken äußeren Transportspur (101) angetrieben ist/sind,
- die rechte äußere Transportspur (103) eine oder mehrere rechte äußere Transporteinrichtungen (163a, 163b, ... 163i) aufweist, welche zum Transport der Brillenglasrohlinge in der Transportrichtung (103a) der rechten äußeren Transportspur (103) angetrieben ist/sind,
- die mittlere Transportspur (102) eine oder mehrere Transporteinrichtungen (162a, 162b, ... 162i) aufweist, welche zum Transport der Brillenglasrohlinge in der Transportrichtung (102a) der mittleren Transportspur (102) angetrieben ist/sind.

13. Herstellungssystem (100) nach einem der vorangegangenen Ansprüche, **dadurch gekennzeichnet, dass**
- eine Recheneinrichtung (180) vorhanden ist, wobei
(i) die Recheneinrichtung (180) eingerichtet ist, einen schnellsten Transportweg zu berechnen, um einen vorbestimmten Brillenglasrohling der Brillenglasrohlinge zu einer vorbestimmten Prozesseinrichtung (121, 122; 123, 124; 125, 126; ... 135, 136; 137, 138) der Prozesseinrichtungen (121, 122; 123, 124; 125, 126; ... 135, 136; 137, 138) zu transportieren und/oder
(ii) die Recheneinrichtung (180) eingerichtet ist, einen kürzesten Transportweg zu berechnen, um einen vorbestimmten Brillenglasrohling der Brillenglasrohlinge zu einer vorbestimmten Prozesseinrichtung (121, 122; 123, 124; 125, 126; ... 135, 136; 137, 138) der Prozesseinrichtungen (121, 122; 123, 124; 125, 126; ... 135, 136; 137, 138) zu transportieren und
- eine Steuereinrichtung (182) vorhanden ist, um den vorbestimmten Brillenglasrohling auf dem berechneten Transportweg zu transportieren.

14. Verfahren zum Betrieb eines Herstellungssystems (100) für Brillengläser aus Brillenglasrohlingen, welches
- eine linke äußere Transportspur (101) zum Transport der Brillenglasrohlinge in einer Transportrichtung (101a),
- mehrere linksseitig neben der linken äußeren Transportspur (101) angeordnete linke Prozesseinrichtungen (121, 123, 125, 127, 129, 131, 133, 135, 137, 139) für die Brillenglasrohlinge,
- eine rechte äußere Transportspur (103) zum Transport der Brillenglasrohlinge in einer Transportrichtung (103a) und
- eine zwischen der linken äußeren Transportspur (101) und der rechten äußeren Transportspur (103) angeordnete mittlere Transportspur (102) zum Transport der Brillenglasrohlinge in einer Transportrichtung (102a) aufweist **dadurch gekennzeichnet, dass**
- die Brillenglasrohlinge über die linke äußere Transportspur (101) und/oder die rechte äußere Transportspur (103) und/oder die mittlere Transportspur (102) zu einer oder mehreren der linken Prozesseinrichtungen (121, 123, 125, 127, 129, 131, 133, 135, 137, 139) oder zu einer oder mehreren rechtsseitig neben der rechten äußeren Transportspur (103) angeordneten mehreren rechten Prozesseinrichtungen (122, 124, 126, 128, 130, 132, 134, 136, 138) für die Brillenglasrohlinge transportiert werden,
- die Brillenglasrohlinge auf der linken äußeren Transportspur (101) und auf der rechten äußeren Transportspur (103) in der identischen Transportrichtung (101a, 103a) transportiert werden,
- die Brillenglasrohlinge auf der mittleren Transportspur (102) in entgegengesetzter oder in gleicher Transportrichtung (101a, 102a, 103a) zu den Brillengläsern auf der linken äußeren Transportspur (101) und den Brillengläsern auf der rechten äußeren Transportspur (103) transportiert werden.

15. Computerprogramm mit Programmcode zur Durchführung aller Verfahrensschritte nach Anspruch 14, wenn das Computerprogramm in einem Computer geladen und/oder in einem Computer ausgeführt wird.
